# EUROPÄISCHE PATENTSCHRIFT

(11) **EP 2 966 231 B1**
(45) Veröffentlichungstag und Bekanntmachung des Hinweises auf die Patenterteilung: **26.08.2020**
(21) Anmeldenummer: 15175639.2
(22) Anmeldetag: 07.07.2015
(51) Int. Cl.: E03F 5/22

(54) **ABWASSERHEBEANLAGE MIT SIEBVORRICHTUNG**
SEWAGE PUMPING STATION WITH FILTER DEVICE
INSTALLATION DE RELEVEMENT D'EAUX USEES AVEC UN DISPOSITIF DE TAMISAGE

(30) Priorität: 10.07.2014 DE 102014109658
(43) Veröffentlichungstag der Anmeldung: 13.01.2016
(73) Patentinhaber: STRATE Technologie für Abwasser GmbH, 31157 Sarstedt (DE)
(72) Erfinder: Unrein, Alexander, 31157 Sarstedt (DE)
(74) Vertreter: Patentanwälte Thömen & Körner

(56) Entgegenhaltungen:
- WO-A1-2015/055749
- GB-A- 881 917
- US-A- 2 278 178
- US-A- 3 278 035

## Beschreibung

Die Erfindung betrifft eine Abwasserhebeanlage gemäß dem Oberbegriff des Patentanspruchs 1.

Siebvorrichtungen werden bei Abwasserhebeanlagen benötigt, welche dazu dienen, z. B. in Ein- oder Mehrfachfamilienhäusern, in Gaststätten oder in öffentlichen Gebäuden anfallendes Abwasser aufzunehmen und von einem niedrigen Niveau aus über eine Druckrohrleitung auf ein höheres Niveau in eine Kanalisation zu pumpen.

Bei den bekannten Abwasserhebeanlagen wird das Abwasser zunächst mittels einer Pumpe einem Sammelbehälter zugeführt, und wenn dieser Sammelbehälter gefüllt ist, wird die Pumpe eingeschaltet um den Sammelbehälter zu entleeren und das Abwasser in die Druckrohrleitung zu fördern.

Dabei ist in der Praxis zu beachten, dass sich im Abwasser üblicherweise Sperrstoffe und/oder Feststoffe befinden, die in den Haushalten zunehmend in das Abwasser gebracht werden.

Um zu verhindern, dass diese Sperrstoffe und/oder Feststoffe beim Befüllen des Sammelbehälters durch die Pumpe fließen und deren Funktion beeinträchtigen oder den Betrieb der Pumpe sogar unmöglich machen, ist vor der Pumpe die Siebvorrichtung vorgesehen. Durch diese Siebvorrichtung werden die im Abwasser befindlichen Sperrstoffe und/oder Feststoffe weitestgehend zurückgehalten. Es erfolgt also eine gewisse Vorreinigung des Abwassers und es wird verhindert, dass die Sperrstoffe und/oder Feststoffe durch die Pumpe in den Sammelbehälter fließen. Die Vorreinigung hat zur Folge, dass sich die Sperrstoffe und/oder Feststoffe im Bereich vor der Siebvorrichtung ansammeln. Dieser Bereich bildet einen Sperrstoffsammelraum.

Wenn der gefüllte Sammelbehälter mittels der Pumpe entleert und das vorgereinigte Abwasser durch die Siebvorrichtung hindurch und durch den Sperrstoffsammelraum in die Druckrohrleitung gepumpt wird, werden die im Sperrstoffsammelraum befindlichen Sperrstoffe und/oder Feststoffe durch den Förderstrom mitgerissen und können so in die Kanalisation gelangen. Der Siebvorrichtung kommt bei den Abwasserhebeanlagen für deren störungsfreien Betrieb ersichtlich eine große Bedeutung zu.

In dem Dokument DE 195 19 305 C2 ist bereits bei einer Abwasserhebeanlage eine Siebvorrichtung beschrieben, die dadurch gebildet wird, dass eine zwischen dem Sperrstoffsammelraum und der Pumpe befindliche Öffnung durch eine Trennklappe größtenteils geschlossen wird, wenn der Sammelbehälter gefüllt wird. Im Bereich der zur Pumpe führenden Öffnung sind kleine Stege vorhanden, an denen die Trennklappe anliegt und somit einen Spalt zur Befüllung des Sammelbehälters offen lässt. Wegen des kleinen Spaltes verbleiben die Feststoffe und Sperrstoffe zum größten Teil im Sperrstoffsammelraum. Bei der Entleerung des Sammelbehälters und bei eingeschalteter Pumpe gibt die Trennklappe die zugeordnete Öffnung vollständig frei, sodass das Abwasser aus dem Sammelbehälter durch die gesamte Öffnung fließen kann, wobei dann die im Sperrstoffsammelraum zurückgehaltenen Sperrstoffe und/oder Feststoffe mitgerissen werden und in gewünschter Weise in die Druckrohrleitung gelangen können.

Ein Nachteil der bekannten Siebvorrichtung in Form der Trennklappe besteht darin, dass durch die Bildung des Spaltes der Querschnitt der zur Pumpe führenden Öffnung erheblich verringert wird. Dadurch wird zum einen die Durchflussmenge des zum Sammelbehälter fließenden Abwassers verringert, und zum anderen stellt sich an der Verengung des Spaltes eine erhöhte Strömungsgeschwindigkeit ein.

Die Verringerung der Durchflussmenge kann bei großem Anfall von Abwasser oder bei starkem Regen zu Problemen führen, wenn sich der Sammelbehälter nicht schnell genug befüllen lässt. Die erhöhte Strömungsgeschwindigkeit im Spalt kann dazu führen, dass Fest- oder Sperrstoffe durch eine Sogwirkung durch den Spalt hindurch in die Pumpe gelangen.

In der Praxis ist häufig auch ein weiterer Nachteil zu beobachten. Es hat sich gezeigt, dass in zunehmendem Maße zu beobachten ist, dass trotz der Trennklappe ein gewisser Anteil von Sperrstoffen und Feststoffen bei der Befüllung des Sammelraumes in die Pumpe gelangt.

Dies ist darauf zurückzuführen, dass in den Haushalten in zunehmendem Maße immer mehr Sperr- und Feststoffe in das Abwasser gebracht werden. Problematisch sind hierbei insbesondere faserige Stoffe wie reißfeste Babytücher. Solche faserigen Stoffe können trotz der Trennklappe durch den Spalt der Öffnung in die Pumpe gelangen, wo sie bei Inbetriebnahme der Pumpe durch deren Laufräder zerrissen werden. In Folge von Verwirbelungen können die zerrissenen faserigen Teile im Lauf der Zeit Zöpfe bilden, die bis zu mehreren Metern lang sein können. Irgendwann führen diese Zöpfe dazu, dass die Pumpe ihre Pumpfunktion nicht mehr erfüllen kann.

In einem solchen Fall sind dann in nachteiliger Weise aufwendige Reparaturarbeiten erforderlich, und während dieser Arbeiten kann die Abwasserhebeanlage nicht betrieben werden. Da die bekannte Siebvorrichtung mit der Trennklappe vollständig im Gehäuse der Abwasserhebeanlage angeordnet ist, sind solche Reparaturarbeiten sowie auch eventuelle Wartungsarbeiten äußerst umständlich und aufwendig, da die Trennklappe nur schwer zugänglich ist.

In dem Dokument EP 2 581 508 B1, von dem die Erfindung ausgeht, ist eine als Siebvorrichtung dienende Filtervorrichtung beschrieben, die von außen frei zugänglich ist, wodurch eventuelle Reparatur- oder Wartungsarbeiten erleichtert werden. Diese bekannte Siebvorrichtung umfasst eine Siebeinheit, die sich über den gesamten Querschnitt des vom Sperrstoffsammelraum zum Sammelbehälter fließenden Abwassers erstreckt, so dass sich der Sammelbehälter bei größerem Anfall von Abwasser besser befüllen lässt.

Bei der bekannten Siebvorrichtung ist die Siebeinheit auswechselbar und nach Art eines Gitters ausgestaltet, wobei das Gitter durch eine Vielzahl von Streifen gebildet wird. Die Streifen sind nach Art eines Kammes mit Lücken und Zähnen versehen. Dabei ist eine erste Gruppe von Streifen waagerecht parallel im Abstand zueinander angeordnet und eine zweite Gruppe von Streifen senkrecht zu den Streifen der ersten Gruppe, wobei jede Lücke jedes Streifens der ersten Gruppe in jeweils eine Lücke eines Streifens der anderen Gruppe eingreift.

Durch diese Siebeinheit wird eine Vielzahl von in Strömungsrichtung des Abwassers verlaufenden Durchflusskanälen gebildet, die sich über den gesamten Strömungsquerschnitt des durch die Filtervorrichtung fließenden Abwassers erstrecken. In ihrer Gesamtheit bilden die Durchflusskanäle ein Sieb, wobei jeder Durchflusskanal eine Sieböffnung darstellt. Durch eine solche Siebeinheit lassen sich die im Abwasser befindlichen Sperr- und Feststoffe in großem Maße zurückhalten, so dass das in den Sammelbehälter fließende Abwasser mehr oder weniger vollständig von diesen Stoffen gereinigt ist.

Der vorteilhaften Siebwirkung der bekannten Siebvorrichtung steht in der Praxis jedoch in nachteiliger Weise die Gefahr entgegen, dass sich die Siebeinheit nach längerer Zeit mit den Sperr- und/oder Feststoffen zusetzt und verstopft. Dann ist es erforderlich, die Abwasserhebeanlage kurzfristig außer Betrieb zu nehmen und die auswechselbare Siebeinheit zu reinigen oder durch eine neue saubere Siebeinheit zu ersetzen.

Aus WO 2015/055749 A und EP 1 108 822 A sind noch Abwasserhebeanlagen bekannt, die einen Trennsieb innerhalb eines Sperrstoffsammelbehälters aufweisen. Aus US 3 278 035 A, US 2 278 178 A und GB 881 917 A sind modulare Siebvorrichtung bekannt, die ihre Anwendung in Abwasserhebeanlagen finden.

Der Erfindung liegt die Aufgabe zugrunde, eine Abwasserhebeanlage mit einer Siebvorrichtung zu schaffen, welche die beschriebenen Nachteile vermeidet und durch welche zur Schonung der Pumpe eine verbesserte Vorreinigung des Abwassers erzielt wird, und durch welche die Durchführung von Reparatur- und Wartungsarbeiten verringert wird.

Die Lösung dieser Aufgabe erfolgt durch die technischen Merkmale des unabhängigen Anspruchs 1. Die erfindungsgemäße Siebvorrichtung der beanspruchten Abwasserhebeanlage umfasst mindestens ein Modul, welches einen Außenrahmen aufweist. Innerhalb des Außenrahmens erstrecken sich von dessen Umfang zur Mitte des Außenrahmens hin mehrere im Abstand zueinander angeordnete abwechselnd lange und kurze Stifte. Die Stifte verlaufen in Richtung des beim Endleeren des Sammelbehälters erzeugten Förderstromes abweichend von der Senkrechten des Förderstromes geneigt. Die erfindungsgemäße Siebvorrichtung bildet ein eigenständiges Bauteil, welches lösbar mit der Abwasserhebeanlage verbunden ist.

Die abwechselnd langen und kurzen Stifte wirken bei der Erfindung wie ein Sieb. In praktischen Versuchen hat sich dabei in vorteilhafter Weise gezeigt, dass die Gefahr, dass an den Stiften die im schmutzigen Abwasser vorhandenen Feststoffe haften bleiben und die Siebvorrichtung verstopft, in entscheidendem Maße verringert wird.

Es bleiben kaum oder nur vergleichbar wenige Feststoffe in der Siebvorrichtung hängen. Dies ist darauf zurückzuführen, dass die Stifte in Richtung des beim Entleeren des Sammelbehälters erzeugten Förderstromes geneigt verlaufen. Dadurch können Feststoffe, die beim Befüllen des Sammelbehälters von den Stiften zurückgehalten worden sind, unter der Einwirkung des kräftigen Förderstromes beim Entleeren des Sammelbehälters von den Stiften gelöst werden. Auf diese Weise wird die erfindungsgemäße Siebvorrichtung bei jedem Förderstrom von den Feststoffen befreit und gereinigt.

Gemäß einer zweckmäßigen Ausgestaltung der Erfindung sind zur Bildung der Siebvorrichtung mehrere Module nebeneinander angeordnet und durch Abstandsrahmen voneinander getrennt. Dabei sind benachbarte Module in Umfangsrichtung der Außenrahmen versetzt zueinander angeordnet. Alle Module und die Abstandsrahmen sind in einem Gehäuse untergebracht, und die Module und die Abstandsrahmen werden mit Außenflanschen zusammengehalten, so dass die Siebvorrichtung ein eigenständiges Bauteil darstellt, welches lösbar mit der Abwasserhebeanlage verbunden werden kann.

Durch die Verwendung mehrerer Module erhöht sich die Anzahl der abwechselnd langen und kurzen Stifte, wodurch sich in vorteilhafter Weise die Siebwirkung an gegebene Rahmenbedingungen anpassen lässt. Je mehr Module nebeneinander versetzt angeordnet werden, umso feiner wird die Siebwirkung.

In einer vorteilhaften Weiterbildung der Erfindung ist vorgesehen, dass der Außenrahmen bzw. die Außenrahmen sowie die Abstandsrahmen kreisförmig ausgebildet sind. Dies ist zweckmäßig, weil die Rohre der Abwasserhebeanlage ebenfalls kreisförmig verlaufen.

Gemäß der Erfindung ist vorgesehen, dass die Stifte als runde Stifte ausgebildet sind und aus einem elastischen Material bestehen.

Der Vorteil dieser Ausgestaltung der Erfindung besteht darin, dass das Gitter der Siebvorrichtung im Gegensatz zum Stand der Technik nicht starr ist, sondern durch elastische, nachgiebige Stifte gebildet wird. Dadurch wird der Gefahr entgegengewirkt, dass die im Abwasser befindlichen Feststoffe an den Stiften hängen bleiben. Diese Wirkung wird auch dadurch unterstützt, dass die Stifte rund sind und keine Kanten aufweisen, so dass sich die Feststoffe beim Entleeren des Sammelbehälters durch die Wirkung des Förderstromes leichter von den Stiften lösen können und von dem Förderstrom mitgerissen werden.

Weitere zweckmäßige Ausgestaltungen der Erfindung sind in den Unteransprüchen angegeben.

Nachfolgend wird die Erfindung anhand des in der Zeichnung dargestellten Ausführungsbeispiels näher erläutert. Es zeigen:
- Fig. 1: Eine schematische Darstellung einer Abwasserhebeanlage mit einer erfindungsgemäßen Siebvorrichtung während des Befüllens des Sammelbehälters der Abwasserhebeanlage,
- Fig. 2: eine Darstellung entsprechend Figur 1, jedoch während der Entleerung des Sammelbehälters der Abwasserhebeanlage,
- Fig. 3: eine perspektivische Darstellung eines Ausführungsbeispiels eines Moduls einer erfindungsgemäßen Siebvorrichtung, und
- Fig. 4: eine Explosionsdarstellung einer durch drei Modulen gebildeten Siebvorrichtung.

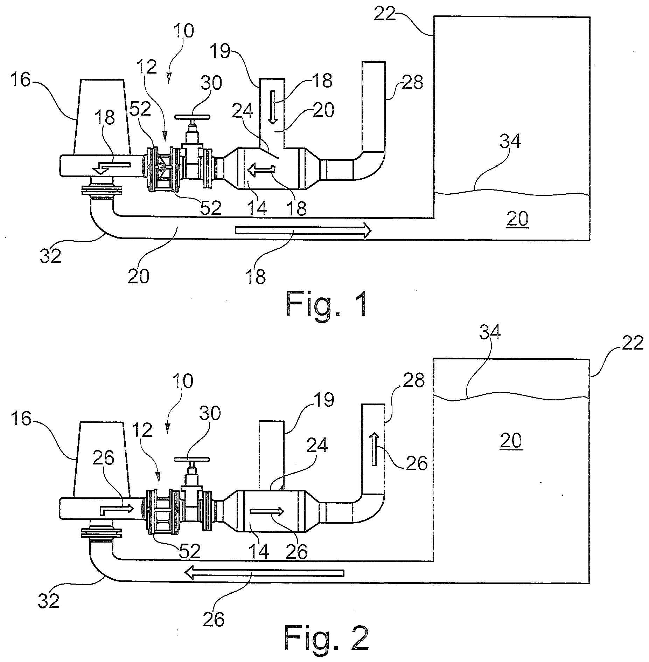

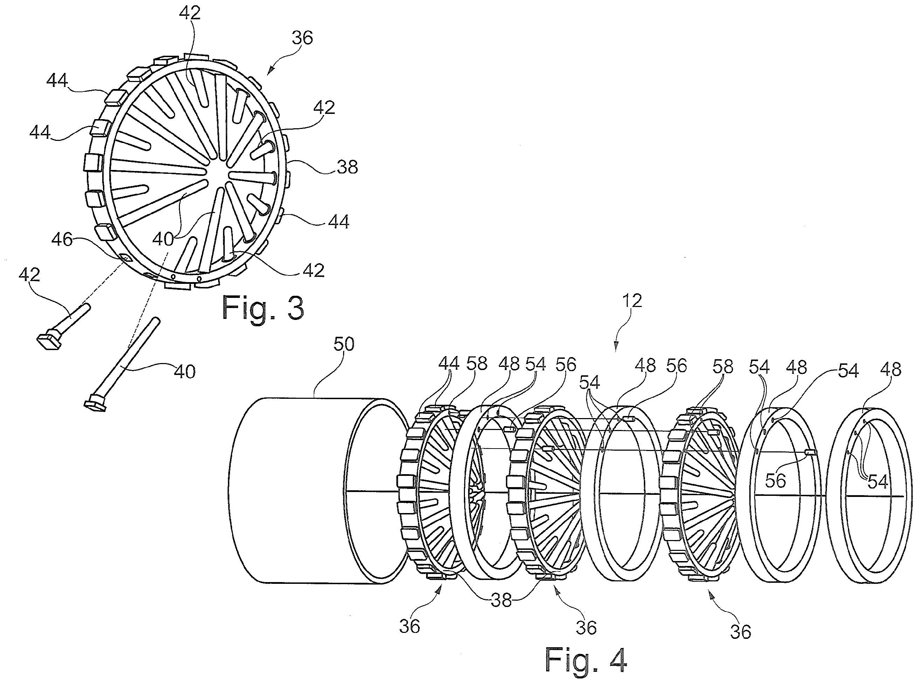

In Figur 1 ist eine Abwasserhebeanlage 10 mit einer Siebvorrichtung 12 dargestellt, deren Aufbau in Figur 3 und Figur 4 gezeigt ist. Durch die Pfeile 18 ist die Flussrichtung von Abwasser 20 dargestellt welches der Abwasserhebeanlage über ein Einlaufrohr 19 zugeführt wird. Das Abwasser 20 wir d mit Hilfe einer Pumpe 16 durch die Siebvorrichtung 12 hindurch über eine Saugleitung 32 in einen Sammelbehälter 22 gefüllt, wodurch der Pegel 34 des Abwassers 20 in dem Sammelbehälter 22 ansteigt.

Dieser Füllvorgang des Sammelbehälters 22 ist durch die Pfeile 18 verdeutlicht. Dabei fließt das Abwasser durch die Siebvorrichtung 12, und diese Siebvorrichtung 12 bewirkt, dass Feststoffe zurückgehalten werden und sich im Bereich vor der Siebvorrichtung 12 in einem Sperrstoffsammelraum 14 ansammeln.

Figur 2 zeigt eine Abwasserhebeanlage 10, bei welcher der Pegel des Abwassers 20 im Sammelbehälter 22 soweit angestiegen ist, dass der Sammelbehälter 22 entleert wird. Dies geschieht mit Hilfe der Pumpe 16, welche einen Förderstrom 26 erzeugt, wobei das Abwasser 20 vom Sammelbehälter 22 durch die Saugleitung 32, die Siebvorrichtung 12, sowie durch den Sperrstoffsammelraum 14 und eine Druckrohrleitung 28 abfließt. Durch den Förderstrom 28 wird die zuvor offene Absperrklappe 24 geschlossen, so dass während der Entleerung des Sammelbehälters 22 kein Abwasser über das Einlaufrohr 19 zufließen kann.

Durch den kräftigen Förderstrom 26 werden etwaige Feststoffe, die in der Siebvorrichtung 12 beim Befüllen des Sammelbehälters 22 hängen geblieben sind, sowie auch die im Sperrstoffsammelraum 14 befindlichen Feststoffe mitgerissen und gelangen mit dem Abwasser 20 über die Druckrohrleitung 28 in eine Kanalisation.

Vor der Siebvorrichtung 12 ist in an sich bekannter Weise ein Absperrschieber 30 angeordnet, mit welchem der gesamte Querschnitt des zur Siebvorrichtung 12 führenden Rohres geschlossen werden kann. Dadurch ist es möglich, an der Siebvorrichtung 12 oder anderen Bauteilen Reparatur- oder Wartungsarbeiten durchzuführen.

In Figur 3 ist in einer perspektivischen Darstellung ein Modul 36 eines Ausführungsbeispiels einer erfindungsgemäßen Siebvorrichtung 12 dargestellt. Das Modul 36 umfasst einen kreisförmigen Außenrahmen 38 mit einer Vielzahl von Öffnungen 46. Diese Öffnungen 46 nehmen lange Stifte 40 und kurze Stifte 42 auf, deren Stiftköpfe 44 auf der Außenwandung des Außenrahmens 38 anliegen. Die Stifte 40, 42 sind so gewählt, dass sich lange Stifte 40 und kurze Stifte 42 über den Umfang des Außenrahmens 38 abwechseln.

Von besonderer Bedeutung ist der Umstand, dass sich die Stifte 40 und 42 nicht senkrecht zur Mitte des Außenrahmens 38 hin erstrecken, sondern geneigt verlaufen, und zwar abweichend von der senkrechten Richtung des Förderstromes beim Entleeren des Sammelbehälters 22 in Richtung des Förderstromes. Die Stifte 40 und 42 sind rund ausgebildet und bestehen aus einem elastischen Material, z. B. aus PUR (Shore 90° A). Die elastischen geneigten Stifte stellen ein wichtiges Merkmal der Erfindung dar, und zwar im Gegensatz zu den beim Stand der Technik verwendeten starren und festen Gitter. Zwar wirkt auch die erfindungsgemäße Siebvorrichtung 12 vergleichbar einem Gitter, welches durch die abwechselnd langen und kurzen Stifte 40 und 42 gebildet wird, jedoch ermöglichen die geneigten und elastischen Stifte gewisse Schwingungen, so dass Feststoffe die möglicherweise beim Befüllen des Sammelbehälters an den Stiften 40 und 42 haften geblieben sind, durch den kräftigen Förderstrom 26 von den Stiften 40 und 42 entfernt werden, wobei dieser Effekt auch dadurch unterstützt wird, dass die Stifte keinerlei Kanten besitzen sondern rund ausgebildet sind.

Anhand von Figur 4 wird nachfolgend der Aufbau eines Ausführungsbeispiels einer erfindungsgemäßen Siebvorrichtung 12 erläutert. Zum besseren Verständnis sind die einzelnen Teile in einer Explosionsdarstellung gezeigt. Die Siebvorrichtung umfasst drei Module 36, die durch Abstandsrahmen 48 voneinander getrennt sind. Wie zu erkennen ist, sind die drei Module 36 in Umfangsrichtung der Außenrahmen 38 bzw. der Abstandsrahmen 48 gesehen leicht versetzt zueinander angeordnet, so dass die Stifte 40, 42 benachbarter Module 36 in Richtung des Förderstromes 26 gesehen nicht in einer Linie liegen. Je mehr versetzt zueinander angeordnete Module 36 vorgesehen sind, umso feiner wird das durch die Module 36 gebildete Sieb.

Die Abstandsrahmen 48 sind mit Bohrungen 54 versehen, und auch die Außenrahmen 38 besitzen entsprechende Bohrungen 58. Durch die jeweils benachbarten Bohrungen 54 der Abstandsrahmen und die Bohrungen 58 der Module 36 werden Positionierstifte 56 gesteckt, wodurch die Module 36 in gewünschter Weise zueinander versetzt positioniert sind.

Im zusammengebauten Zustand befinden sich die Module 36 und die Abstandsrahmen 48 innerhalb eines Gehäuses 50 und werden durch die in Figur 1 und Figur 2 gezeigten Außenflansche 52 zusammengehalten, wodurch die Siebvorrichtung 12 ein eigenständiges Bauteil bildet, welches lösbar mit der Abwasserhebeanlage 10 verbunden ist. Wie in Figur 4 zu erkennen ist, sind auf der äußeren rechten Seite zwei Abstandsrahmen 48 nebeneinander angeordnet. Durch den zweiten äußersten rechten Abstandsrahmen 48 wird erreicht, dass die in Figur 4 nach rechts geneigt verlaufenden Stifte 40, 42 im zusammengebauten Zustand nicht aus dem Gehäuse 50 heraus ragen.

### Bezugszeichenliste

(ist Teil der Beschreibung)
- 10: Abwasserhebeanlage
- 12: Siebvorrichtung
- 14: Sperrstoffsammelraum
- 16: Pumpe
- 18: Pfeile
- 19: Einlaufrohr
- 20: Abwasser
- 22: Sammelbehälter
- 24: Absperrklappe
- 26: Förderstrom
- 28: Druckrohrleitung
- 30: Absperrschieber
- 32: Saugleitung
- 34: Pegel
- 36: Modul
- 38: Außenrahmen
- 40: Stifte (lang)
- 42: Stifte (kurz)
- 44: Stiftkopf
- 46: Öffnungen
- 48: Abstandsrahmen
- 50: Gehäuse
- 52: Außenflansch
- 54: Bohrungen
- 56: Positionierstifte
- 58: Bohrungen

## Patentansprüche

1. Abwasserhebeanlage (10), wobei die Abwasserhebeanlage (10) ein Einlaufrohr (19), einen Sperrstoffsammelraum (14) zur Aufnahme von ungereinigtem Abwasser (20) über das Einlaufrohr (19), eine von außen frei zugängliche Siebvorrichtung (12), eine Pumpe (16) und einen Sammelbehälter (22) zur Aufnahme von durch die Siebvorrichtung (12) zumindest teilweise vorgereinigtem Abwasser (20) umfasst, wobei der Sperrstoffsammelraum (14) mit einer Druckrohrleitung (28) und einer Saugleitung (32), und über die Siebvorrichtung (12) und die Pumpe (16) strömungstechnisch mit dem Sammelbehälter (22) verbunden ist, wobei die Abwasserhebeanlage (10) derart eingerichtet ist, dass im Abwasser (20) vorhandene Feststoffe von der Siebvorrichtung (12) zurückgehalten werden und im Sperrstoffsammelraum (14) verbleiben und der mit dem zumindest teilweise vorgereinigten Abwasser (20) gefüllte Sammelbehälter (22) mittels der Pumpe (16) entleert wird und der dadurch erzeugte Förderstrom (26) des Abwassers (20) durch die Siebvorrichtung (12) und durch den Sperrstoffsammelraum (14) hindurch in die Druckrohrleitung (28) gepumpt wird, wobei die Feststoffe des Abwassers (20) im Sperrstoffsammelraum (14) durch den Förderstrom (26) mitgenommen werden und in die Druckrohrleitung (28) gelangen, **dadurch gekennzeichnet, dass** die Siebvorrichtung (12) mindestens ein Modul (36) umfasst, welches einen Außenrahmen (38) aufweist, dass sich innerhalb des Außenrahmens (38) von dessen Umfang zur Mitte des Außenrahmens (38) hin mehrere im Abstand zueinander angeordnete abwechselnd lange (40) und kurze Stifte (42) erstrecken, die in Bezug auf die durch den Außenrahmen (38) gebildete Ebene und in Richtung des beim Entleeren des Sammelbehälters (22) erzeugten Förderstromes (26) abweichend von der senkrechten Richtung geneigt verlaufen, wobei die Stifte (40, 42) als runde Stifte (40, 42) ausgebildet sind und aus einem elastischen Material bestehen, und dass die Siebvorrichtung (12) ein eigenständiges Bauteil bildet, welches lösbar mit der Abwasserhebeanlage (10) verbunden ist.

2. Abwasserhebeanlage (10) nach Anspruch 1, **dadurch gekennzeichnet, dass** mehrere Module (36) nebeneinander angeordnet und durch Abstandsrahmen (48) voneinander getrennt sind, dass benachbarte Module (36) in Umfangsrichtung der Außenrahmen (38) versetzt zueinander angeordnet sind, und dass die Module (36) und die Abstandsrahmen (48) in einem Gehäuse (50) angeordnet sind, und dass die Module (36) und die Abstandsrahmen (48) mit Außenflanschen (52) zusammengehalten sind, wodurch die Siebvorrichtung (12) als eigenständiges Bauteil gebildet wird.

3. Abwasserhebeanlage (10) nach Anspruch 1 und/oder 2, **dadurch gekennzeichnet, dass** der Außenrahmen (38) bzw. die Außenrahmen (38) sowie die Abstandsrahmen (48) kreisförmig ausgebildet sind.

4. Abwasserhebeanlage (10) nach Anspruch 1, **dadurch gekennzeichnet, dass** die Stifte (40, 42) aus PUR (Shore 90° A) bestehen.

5. Abwasserhebeanlage (10) nach einem oder mehreren der vorherigen Ansprüche 1-4, **dadurch gekennzeichnet, dass** die kurzen Stifte (42) etwa halb so lang wie die langen Stifte (40) sind.

6. Abwasserhebeanlage (10) nach einem oder mehreren der vorherigen Ansprüche 1-5, **dadurch gekennzeichnet,** die Stifte (40, 42) derart geneigt verlaufen, dass sie mit der durch den Außenrahmen (38) aufgespannten Ebene einen Winkel von 30° bilden.

## Claims

1. Wastewater lifting system (10), wherein the wastewater lifting system (10) comprises an inlet pipe (19), a solids collection space (14) for receiving untreated wastewater (20) via the inlet pipe (19), a screen device (12) which is freely accessible from the outside, a pump (16), and a collection container (22) for receiving wastewater (20) pre-treated at least partially by the screen device (12), wherein the solids collection space (14) is connected to a pressure pipeline (28) and to a suction line (32) and, via the screen device (12) and the pump (16), in terms of flow to the collection container (22), wherein the wastewater lifting system (10) is configured such that solids present in the wastewater (20) are retained by the screen device (12) and remain in the solids collection space (14), and the collection container (22), which is filled with the at least partially pre-treated wastewater (20), is emptied by means of the pump (16), and the thus generated delivery flow (26) of the wastewater (20) is pumped through the screen device (12) and through the solids collection space (14) into the pressure pipeline (28), wherein the solids of the wastewater (20) in the solids collection space (14) are carried along by the delivery flow (26) and pass into the pressure pipeline (28), **characterized in that** the screen device (12) comprises at least one module (36) which has an outer frame (38), **in that**, within the outer frame (38), there extend from the circumference thereof towards the centre of the outer frame (38) multiple alternately long (40) and short (42) pins which are arranged with a spacing to one another and which run in an inclined manner in relation to the plane formed by the outer frame (38) and in the direction of the delivery flow (26) generated during the emptying of the collection container (22) so as to deviate from the vertical direction, wherein the pins (40, 42) are in the form of round pins (40, 42) and consist of an elastic material, and **in that** the screen device (12) forms an independent component, which is connected detachably to the wastewater lifting system (10).

2. Wastewater lifting system (10) according to Claim 1, **characterized in that** multiple modules (36) are arranged adjacently to one another and are separated from one another by spacer frames (48), **in that** adjacent modules (36) are arranged offset from one another in the circumferential direction of the outer frame (38), and **in that** the modules (36) and the spacer frames (48) are arranged in a housing (50), and **in that** the modules (36) and the spacer frames (48) are held together by outer flanges (52), whereby the screen device (12) is formed as an independent component.

3. Wastewater lifting system (10) according to Claim 1 and/or 2, **characterized in that** the outer frame (38) or the outer frames (38) and the spacer frames (48) are of circular form.

4. Wastewater lifting system (10) according to Claim 1, **characterized in that** the pins (40, 42) consist of PUR (Shore 90° A).

5. Wastewater lifting system (10) according to one or more of the preceding Claims 1-4, **characterized in that** the short pins (42) are approximately half as long as the long pins (40).

6. Wastewater lifting system (10) according to one or more of the preceding Claims 1-5, **characterized in that** the pins (40, 42) run in an inclined manner such that they form an angle of 30° with the plane spanned by the outer frame (38).

## Revendications

1. Installation de relèvement d'eaux usées (10), l'installation de relèvement d'eaux usées (10) comprenant un tuyau d'entrée (19), un compartiment collecteur de matières bloquantes (14) pour recevoir par le tuyau d'entrée (19) des eaux usées non purifiées (20), un dispositif de criblage (12) accessible librement depuis l'extérieur, une pompe (16) et un réservoir collecteur (22) pour recevoir des eaux usées (20) au moins partiellement pré-purifiées par le dispositif de criblage (12), le compartiment collecteur de matières bloquantes (14) étant en communication fluidique avec une conduite sous pression (28) et une conduite d'aspiration (32) et par le dispositif de criblage (12) et la pompe (16) avec le réservoir collecteur (22), l'installation de relèvement d'eaux usées (10) étant aménagée de telle sorte que des matières solides présentes dans les eaux usées (20) sont retenues par le dispositif de criblage (12) et restent dans le compartiment collecteur de matières bloquantes (14), et le réservoir collecteur (22) rempli des eaux usées (20) au moins partiellement pré-purifiées est vidé au moyen de la pompe (16) et le courant de refoulement (26) des eaux usées (20) ainsi créé est pompé à travers le dispositif de criblage (12) et à travers le compartiment collecteur de matières bloquantes (14) dans la conduite sous pression (28), dans laquelle les matières solides des eaux usées (20) dans le compartiment collecteur de matières bloquantes (14) sont entraînées par le courant de refoulement (26) et atteignent la conduite sous pression (28), **caractérisée en ce que** le dispositif de criblage (12) comprend au moins un module (36) qui présente un cadre extérieur (38), **en ce qu'**à l'intérieur du cadre extérieur (38), depuis la circonférence de celui-ci jusqu'au centre du cadre extérieur (38), plusieurs tiges longues (40) et courtes (42) sont disposées en alternance à distance les unes des autres et s'étendent par rapport au plan formé par le cadre extérieur (38) et en direction du courant de refoulement (26) créé lors du vidage du réservoir collecteur (22), avec une inclinaison qui s'écarte de la direction verticale, les tiges (40, 42) étant réalisées sous forme de tiges rondes (40, 42) et composées d'un matériau élastique, et **en ce que** le dispositif de criblage (12) est un composant autonome qui est relié de manière amovible à l'installation de relèvement d'eaux usées (10).

2. Installation de relèvement d'eaux usées (10) selon la revendication 1, **caractérisée en ce que** plusieurs modules (36) sont disposés les uns à côté des autres et sont séparés les uns des autres par des cadres d'espacement (48), **en ce que** des modules voisins (36) sont disposés de manière décalée les uns par rapport aux autres dans la direction circonférentielle des cadres extérieurs (38), et **en ce que** les modules (36) et les cadres d'espacement (48) sont disposés dans un boîtier (50), et **en ce que** les modules (36) et les cadres d'espacement (48) sont maintenus ensemble par des brides extérieures (52), de sorte que le dispositif de criblage (12) est formé comme un composant autonome.

3. Installation de relèvement d'eaux usées (10) selon la revendication 1 et/ou 2, **caractérisée en ce que** le cadre extérieur (38) ou les cadres extérieurs (38) ainsi que les cadres d'espacement (48) sont réalisés de manière circulaire.

4. Installation de relèvement d'eaux usées (10) selon la revendication 1, **caractérisée en ce que** les tiges (40, 42) sont composées de PUR (Shore 90° A).

5. Installation de relèvement d'eaux usées (10) selon une ou plusieurs des revendications précédentes 1 à 4, **caractérisée en ce que** les tiges courtes (42) sont approximativement deux fois moins longues que les tiges longues (40).

6. Installation de relèvement d'eaux usées (10) selon une ou plusieurs des revendications précédentes 1 à 5, **caractérisée en ce que** les tiges (40, 42) s'étendent avec une inclinaison telle qu'elles forment un angle de 30° avec le plan défini par le cadre extérieur (38).
